# EUROPÄISCHE PATENTANMELDUNG

(11) **EP 3 910 763 A1**
(43) Veröffentlichungstag der Anmeldung: **17.11.2021**
(21) Anmeldenummer: 20174382.0
(22) Anmeldetag: 13.05.2020
(51) Int. Cl.: H02K 5/173, H02K 11/215, H02K 5/24

(54) **GUMMITOPF**

(71) Anmelder: Hilti Aktiengesellschaft, 9494 Schaan (LI)
(72) Erfinder: Schreiber, Wolfgang, 86807 Buchloe (DE); Burger, Helmut, 86944 Unterdießen (DE); Artmann, Konrad, 86938 Schondorf (DE); Schmid, Tobias, 86875 Emmenhausen (DE); Ege, Manfred, 86989 Steingaden (DE)
(74) Vertreter: Hilti Aktiengesellschaft Corporate Intellectual Property

(57) **Zusammenfassung**

Positioniervorrichtung für einen Elektromotor und Lagerbock, wobei der Elektromotor einen Rotor, eine Rotorwelle und Stator enthält.

Die Positioniervorrichtung ist wenigstens teilweise aus einem elastischen Werkstoff und im Wesentlichen topfartig mit einem Innenraum ausgestaltet sowie in einer zentralen Ausnehmung des Lagerbocks zur wenigstens teilweisen Aufnahme eines erstes Endes der Rotorwelle positionierbar.

## Beschreibung

### Gummitopf

Die vorliegende Erfindung betrifft eine Positioniervorrichtung für einen Elektromotor und Lagerbock, wobei der Elektromotor einen Rotor, eine Rotorwelle und Stator enthält.

Darüber hinaus betrifft die vorliegende Erfindung einen Elektromotor enthaltend einen Rotor, eine Rotorwelle und einen Stator, wobei der Elektromotor mit einem Lagerbock verbindbar ist.

Moderne Werkzeugmaschinen, wie beispielsweise Bohrhämmer, Sägen, Schleifgeräte oder dergleichen, enthalten einen Elektromotor als Antrieb sowie zum Erzeugen eines Drehmoments.

Elektromotoren sind relativ komplexe Vorrichtungen, bei denen zahlreiche Komponenten in vorbestimmten Ausrichtungen zueinander positioniert verbaut werden.

Insbesondere die Ausrichtung und Positionierung der Rotorwelle zu dem Lagerbock erweist sich hierbei oftmals als problematisch, da der Bauraum in einem Elektromotor hierbei begrenzt und enge Toleranzen eingehalten werden müssen.

Darüber hinaus sollte die Konstruktion des Elektromotors möglichst einfach gehalten werden, um die Kosten und den Montageaufwand für den Elektromotor niedrig zu halten.

Aufgabe der vorliegenden Erfindung ist es daher, eine Positioniervorrichtung für einen Elektromotor und Lagerbock sowie einen Elektromotor bereitzustellen, mit dem das vorstehend genannte Problem gelöst werden kann.

Die Aufgabe wird jeweils gelöst durch den Gegenstand des unabhängigen Anspruchs 1 und 6. Weitere vorteilhafte Ausgestaltungsformen der Erfindung finden sich in den entsprechenden Unteransprüchen.

Die Aufgabe wird insbesondere gelöst durch eine Positioniervorrichtung für einen Elektromotor und Lagerbock, wobei der Elektromotor einen Rotor, eine Rotorwelle und Stator enthält.

Erfindungsgemäß ist die Positioniervorrichtung wenigstens teilweise aus einem elastischen Werkstoff und im Wesentlichen topfartig mit einem Innenraum ausgestaltet sowie in einer zentralen Ausnehmung des Lagerbocks zur wenigstens teilweisen Aufnahme eines erstes Endes der Rotorwelle positionierbar. Hierdurch kann auf einfache Art und Weise eine möglichst genaue Ausrichtung und Positionierung der Rotorwelle zum Lagerbock erreicht werden.

Gemäß einer vorteilhaften Ausführungsform der vorliegenden Erfindung kann es möglich sein, dass wenigstens eine Fixiereinrichtung enthalten ist zum Aufnehmen und Halten eines Lager für das erste Ende der Rotorwelle. Hierdurch kann die Ausrichtung und Positionierung der Rotorwelle zum Lagerbock weiter verbessert werden. Die Fixiereinrichtung kann dabei jeweils eine Klemmfläche an einer Mantelinnenfläche und/oder ein Anschlagelement in axialer Richtung enthalten.

Entsprechend einer weiteren vorteilhaften Ausführungsform der vorliegenden Erfindung kann es möglich sein, dass wenigstens eine Halteeinrichtung enthalten ist zum Aufnehmen und Halten einer Hall-Platine. Hierdurch kann die Hall-Platine in einer genauen Positionierung mit der Vorrichtung wiederlösbar verbunden werden und eine vorbestimmte Ausrichtung der Hall-Platine zu dem Rotor erreicht werden. Die Halteeinrichtung kann dabei jeweils eine erste und/oder zweite Erhebung in axialer Richtung enthalten, wobei die erste und zweite Erhebung unterschiedliche axiale Längen aufweisen können.

Gemäß einer weiteren vorteilhaften Ausführungsform der vorliegenden Erfindung kann es möglich sein, dass an einer Außenmantelfläche eine axial verlaufende Aussparung enthalten ist zur wenigstens teilweisen Aufnahme und Halten einer Leitung, wenn sich die Positioniervorrichtung in der zentralen Ausnehmung des Lagerbocks befindet. Hierdurch kann erreicht werden, dass die Leitung an einer vorbestimmten Stelle geführt und nicht ungewollt zwischen Komponenten eingeklemmt wird.

Entsprechend einer weiteren vorteilhaften Ausführungsform der vorliegenden Erfindung kann es möglich sein, dass an einem ersten Ende der Positioniervorrichtung eine Staubschutzkappe enthalten ist. Hierdurch kann auf einfache Art und Weise ein Eindringen von Staub oder anderer Verunreinigungen in das Innere des Elektromotors verhindert werden.

Darüber hinaus wird die Aufgabe gelöst durch einen Elektromotor enthaltend einen Rotor, eine Rotorwelle und einen Stator, wobei der Elektromotor mit einem Lagerbock verbindbar ist.

Erfindungsgemäß ist vorgesehen, dass eine Positioniervorrichtung enthalten ist, welche wenigstens teilweise aus einem elastischen Werkstoff und im Wesentlichen topfartig mit einem Innenraum ausgestaltet sowie in einer zentralen Ausnehmung des Lagerbocks zur wenigstens teilweisen Aufnahme eines erstes Endes der Rotorwelle positionierbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: einen Querschnitt durch einen Elektromotor mit einem Stator, einem Rotor, einer Rotorwelle, einem Lagerbock sowie einer Positioniervorrichtung;
- Figur 2: eine perspektivische Ansicht auf die Positioniervorrichtung mit einer Unterseite und einen Innenraum;
- Figur 3: eine perspektivische Ansicht auf die Positioniervorrichtung, welche eine Oberseite und eine Staubschutzkappe der Positioniervorrichtung zeigt;
- Figur 4: eine perspektivische Ansicht auf die Unterseite der Positioniervorrichtung mit einer Hall-Platine;
- Figur 5: eine Unteransicht auf die Positioniervorrichtung mit der Hall-Platine;
- Figur 6: eine perspektivische Ansicht auf die Positioniervorrichtung, welche die Unterseite der Positioniervorrichtung mit einem Lager zeigt;

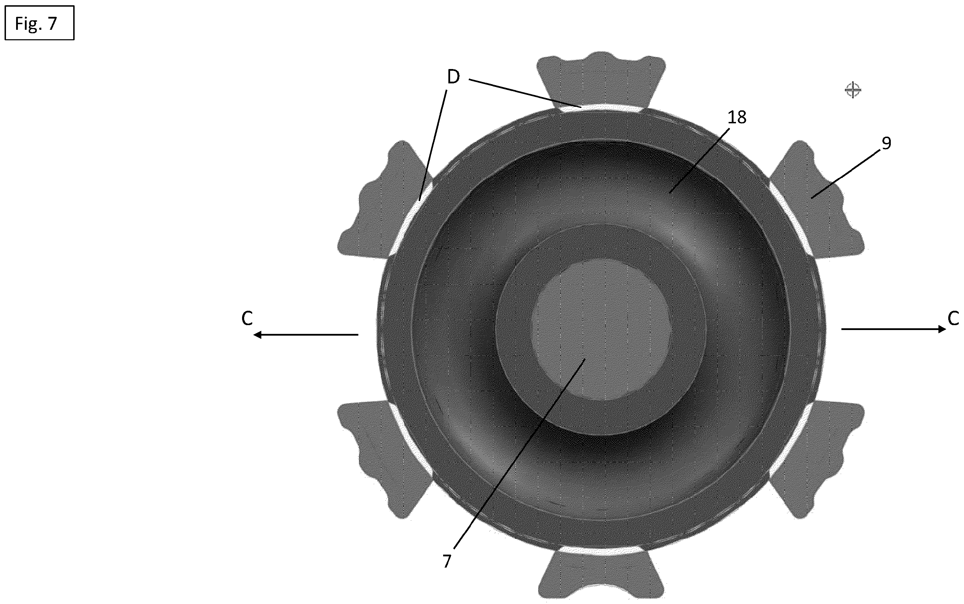

- Figur 7: eine Unteransicht auf die Positioniervorrichtung mit dem Lager;
- Figur 8: einen Querschnitt auf die Positioniervorrichtung mit dem Lager;
- Figur 9: eine perspektivische Ansicht auf die Positioniervorrichtung mit der Hall-Platine und einer Leitung;
- Figur 10: eine Schnittansicht auf eine unteres Ende der die Positioniervorrichtung mit der Hall-Platine;
- Figur 11: eine perspektivische Ansicht auf eine Oberseite der Positioniervorrichtung in einer zentralen Ausnehmung des Lagerbocks;

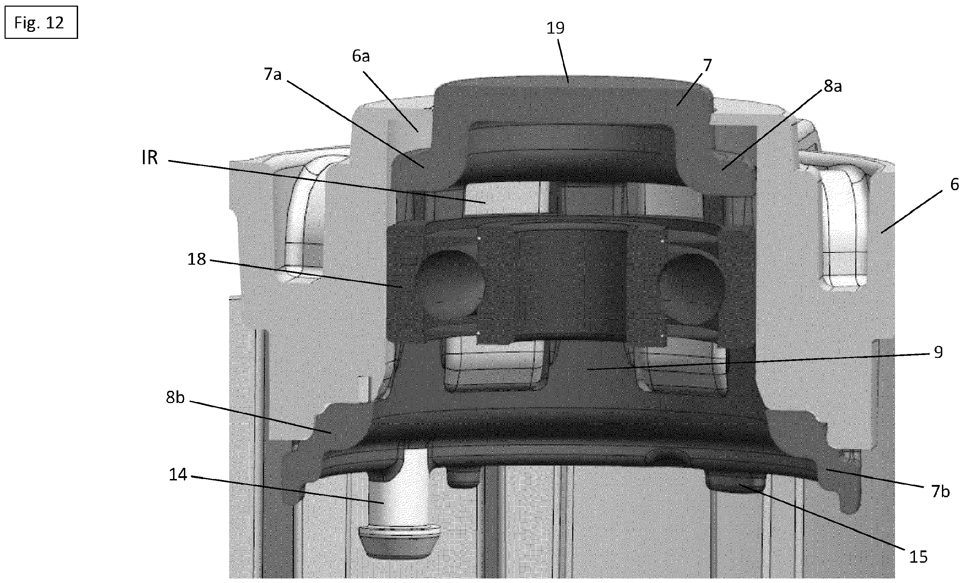

- Figur 12: einen Querschnitt durch die Positioniervorrichtung in der zentralen Ausnehmung des Lagerbocks;

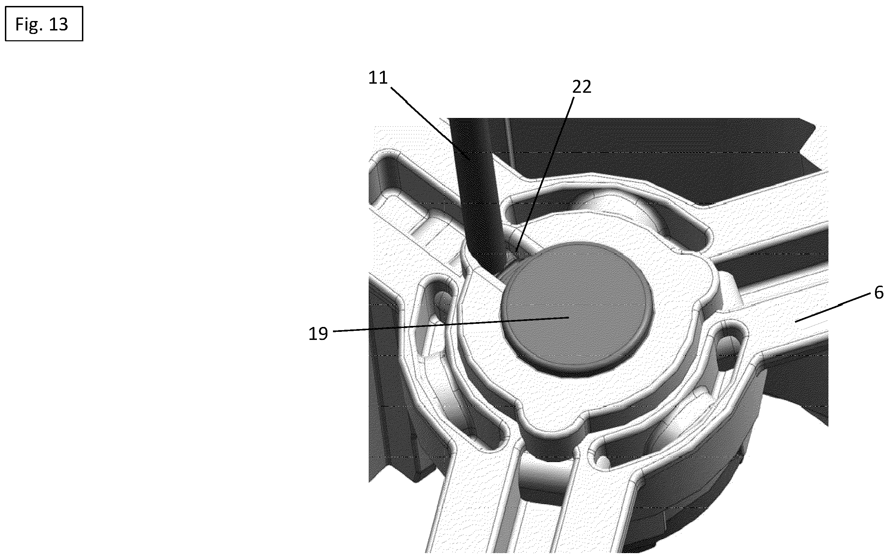

- Figur 13: eine Detailansicht auf die Positioniervorrichtung in der zentralen Ausnehmung des Lagerbocks mit der Leitung, die durch eine Öffnung des Lagerbocks verläuft; und
- Figur 14: einen Querschnitt durch die Positioniervorrichtung in der zentralen Ausnehmung des Lagerbocks zusammen mit der Leitung.

### Ausführungsbeispiele:

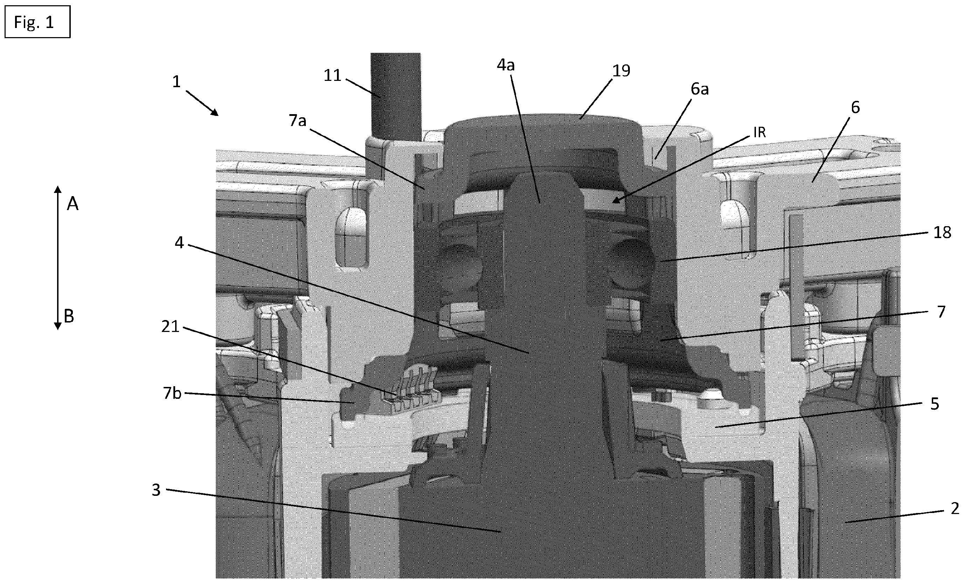

In Figur 1 ist ein erstes Ende 1a eines Elektromotors 1 gezeigt. Der Elektromotor 1 enthält dabei im Wesentlichen einen Stator 2, einen Rotor 3, eine Rotorwelle 4, eine Hall-Platine 5, einen Lagerbock 6 und eine Positioniervorrichtung 7.

Der Elektromotor 1 kann als Antrieb für eine Werkzeugmaschine verwendet werden und dient im Wesentlichen zum Erzeugen eines Drehmoments. Das erzeugte Drehmoment kann entweder direkt auf ein mit einer Werkzeugmaschine verbundenes Werkzeug oder mit Hilfe eines Getriebes auf das Werkzeug übertragen werden. Weder die Werkzeugmaschine noch das Werkzeug sind in den Figuren gezeigt.

Der Rotor 3 ist drehfest mit der Rotorwelle 4 verbunden und befindet sich so in einem Innenraum des Stators 2, dass ein erstes Ende 4a der Rotorwelle 4 in Richtung A aus dem Stator 2 herausragt. Die Richtung A ist die axiale Richtung des Elektromotors 1. Ein zweites Ende der Rotorwelle 4 ist in den Figuren nicht gezeigt. Die Rotorwelle 4 ist im Wesentlichen als zylindrischer Stab ausgestaltet und dient zum Übertragen eines in dem Elektromotor 1 erzeugten Drehmoments auf ein Getriebe. Das Getriebe ist in den Figuren nicht gezeigt.

Der Lagerbock 6 ist im Wesentlichen topfförmig ausgestaltet und weist eine zentrale, kreisrunde Aussparung 6a auf. Der Lagerbock 6 dient zum Aufnehmen und Halten des Stators 2 und Rotors 3. Der Lagerbock 6 kann wiederum mit einem Gehäuse einer Werkzeugmaschine verbunden werden. Die Werkzeugmaschine ist in den Figuren nicht gezeigt.

Wie ebenfalls in Figur 1 gezeigt, ist der Stator 2 mit einem ersten Ende 2a so mit dem Lagerbock 6 verbunden, dass das erste Ende 4a der Rotorwelle 4 in die zentrale Ausnehmung 6a des Lagerbocks 6 hineinragt.

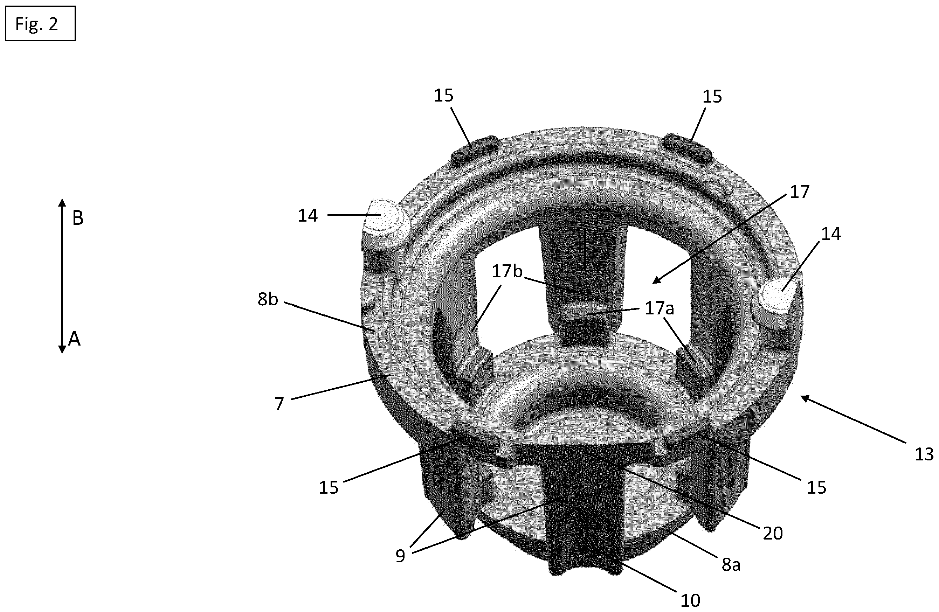

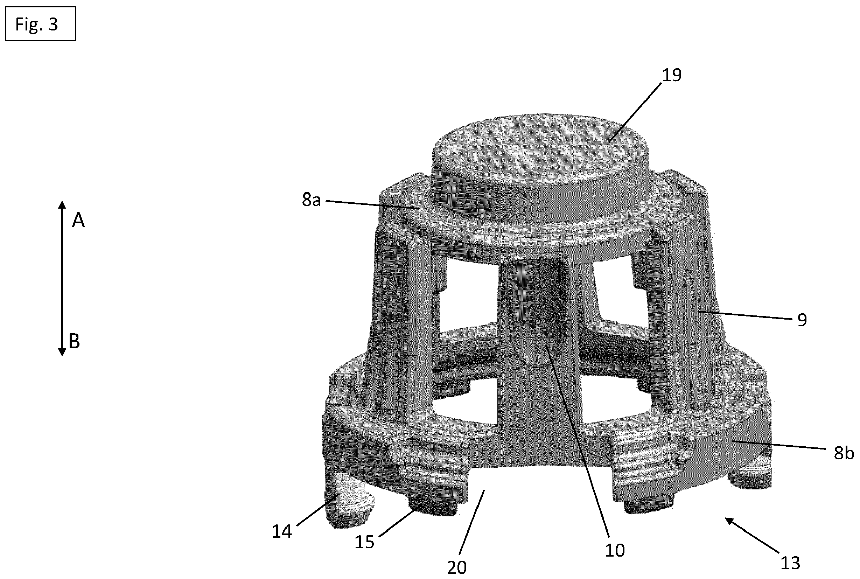

Wie insbesondere den Figuren 2 und 3 gezeigt ist die Positioniervorrichtung 7 im Wesentlichen topfförmig ausgestaltet. Die in den Figuren gezeigte Ausführungsform der topfförmig ausgestalteten Positioniervorrichtung 7 enthält ein erstes Ende 7a, ein zweites Ende 7b, eine Innenmantelfläche 7c, eine Außenmantelfläche 7d, ein oberes Ringelement 8a, ein unteres Ringelement 8b sowie eine sechs Trägerelemente 9.
Die Positioniervorrichtung 7 ist aus einem elastischen Werkstoff gefertigt. Bei dem elastischen Werkstoff kann es sich beispielsweise um Gummi handeln.
Die Positioniervorrichtung 7 kann auch als Gummitopf bezeichnet werden.
Die sechs Trägerelemente 9 sind in gleichmäßigen Abständen kreisförmig angeordnet und verbinden das untere Ringelement 8b mit dem oberen Ringelement 8a. Das obere Ringelement 8a ist an dem ersten Ende 7a und das untere Ringelement 8b ist an dem zweiten Ende 7b der Positioniervorrichtung 7 vorgesehen. Das untere Ringelement 8b weist einen größeren Durchmesser auf als das obere Ringelement 8a. Die Positioniervorrichtung 7 ist dadurch konisch bzw. als Kegelstumpf ausgeformt.

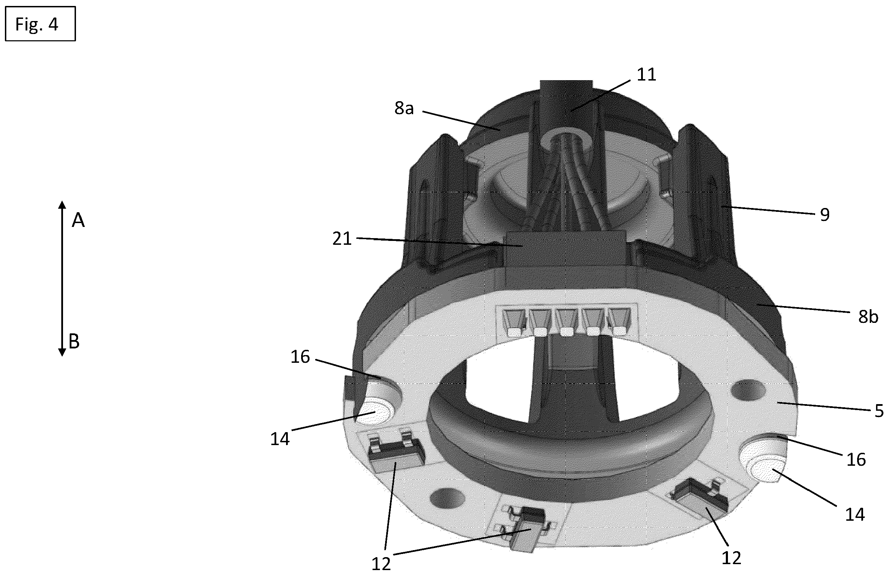

Entsprechend einer alternativen Ausführungsform können mehr oder weniger als sechs Trägerelemente 9 enthalten sein. Es ist auch möglich, dass anstelle der einzelnen Trägerelemente 9 eine durchgehende Mantelfläche enthalten ist. Jedes Trägerelement 9 enthält ein oberes Ende 9a und ein unteres Ende 9b. Das obere Ende 9a eines jeden Trägerelements 9 ist mit dem oberen Ringelement 8a fest verbunden und das untere Ende 9b eines jeden Trägerelements 9 ist wiederum mit dem unteren Ringelement 8b fest verbunden. Die Trägerelemente 9 erstrecken sich in Richtung A. Zwischen den einzelnen Trägerelementen 9 ist jeweils eine Öffnung vorgesehen. Die fünf der sechs Trägerelemente 9 sind nahezu identisch ausgestaltet. Wie später im Detail beschrieben enthält eines der sechs Trägerelemente 9 an der Außenmantelfläche eine axial verlaufende Aussparung 10 zum Aufnehmen und Halten einer Leitung 11. Die axial verlaufende Aussparung 10 kann auch als Einbuchtung oder Einkerbung bezeichnet werden. Die Leitung 11 kann wiederum auch als Litze bezeichnet werden und verbindet die Hall-Platine 5 mit einer Steuerungseinrichtung des Elektromotor 1 oder der Werkzeugmaschine. Die Hall-Platine 5 enthält an einer Unterseite 5a drei Hall-Sensoren 12, siehe Figur 4. Die Hall-Sensoren 12 dienen zum Erfassen der Position des Rotors 3 relativ zum Stator 2. Mit Hilfe der Leitung 11 können die von den Hall-Sensoren 12 erfassten Positionsdaten von der Hall-Platine 5 zu der Steuerungseinrichtung gesendet werden. Die Steuerungseinrichtung ist in den Figuren nicht gezeigt.

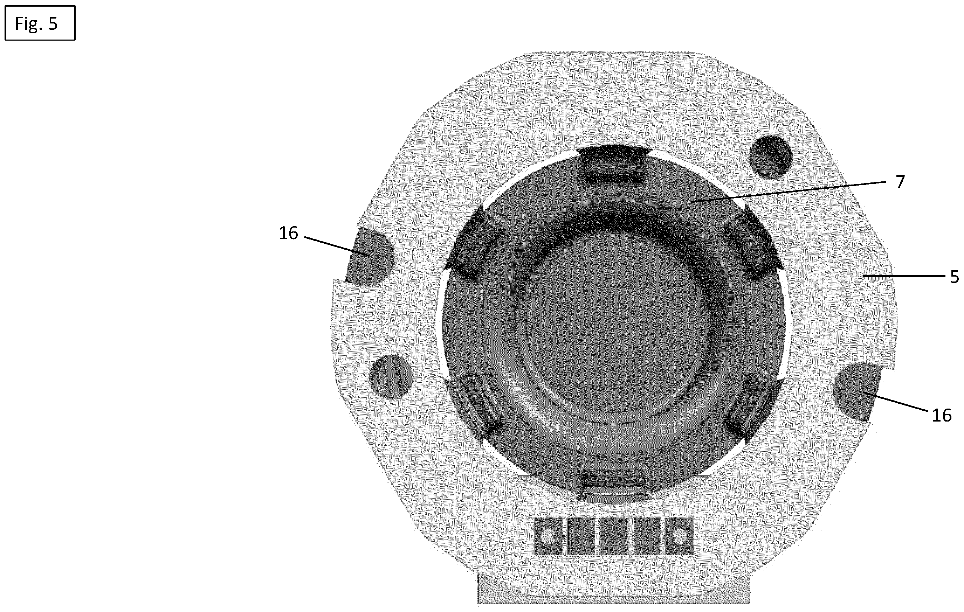

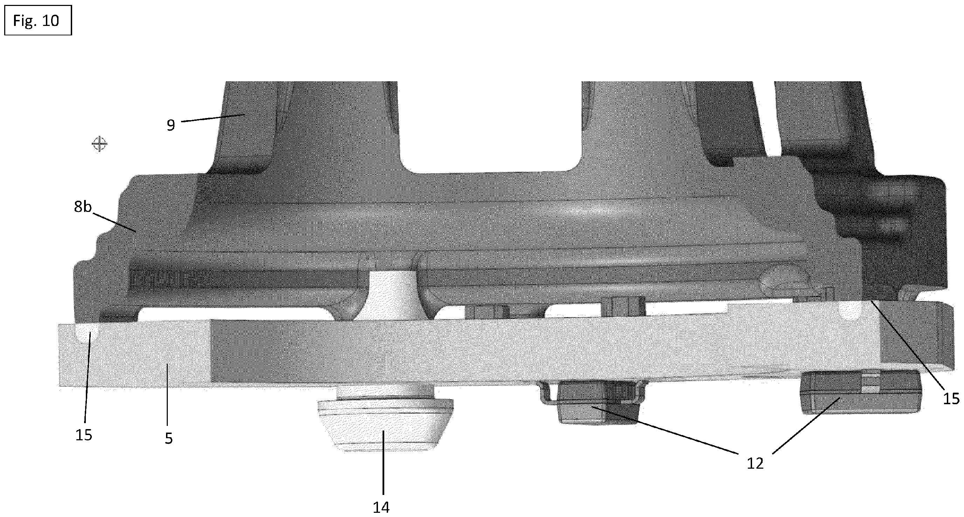

Wie in Figur 1 ersichtlich enthält das untere Ringelement 7b eine Halteeinrichtung 13 enthalten ist zum Aufnehmen und Halten der Hall-Platine 5. Bei der Hall-Platine 5 handelt es sich um eine Platine (auch Leiterplatte genannt) mit den mehreren Hall-Sensoren 12. Die in dem vorliegenden Ausführungsbeispiel gezeigte Halteeinrichtung 13 enthält dabei zwei hohe Fixierelemente 14 sowie vier niedrige Ausrichtelemente 15. Die Fixierelement 14 sowie die Ausrichtelemente 15 sind jeweils gegenüberliegend positioniert. Die niedrigen Ausrichtelemente 15 sind dabei weniger als halb so hoch wie hohen Erhebungen 14. Jede der Erhebung erstreckt sich in Richtung A.
Wie in Figur 4 und 5 zu erkennen ist, weist die ringförmig ausgestaltete Hall-Platine 5 zwei gegenüber liegende Aussparungen 16 auf. Die beiden Fixierelemente 14 werden durch die beiden Aussparungen 16 geführt, sodass die Hall-Platine 5 mit dem unteren Ringelement 8b wiederlösbar verbunden ist. Dadurch die Positioniervorrichtung 7 aus einem elastischen Werkstoff besteht, können die beiden Fixierelemente 14 elastisch verformt werden, um in die Aussparungen 16 eingeführt zu werden. Die vier Ausrichtelemente 15 ragen in entsprechend ausgeformte Aussparungen 16 in der Hall-Platine 5, siehe Figur 10.

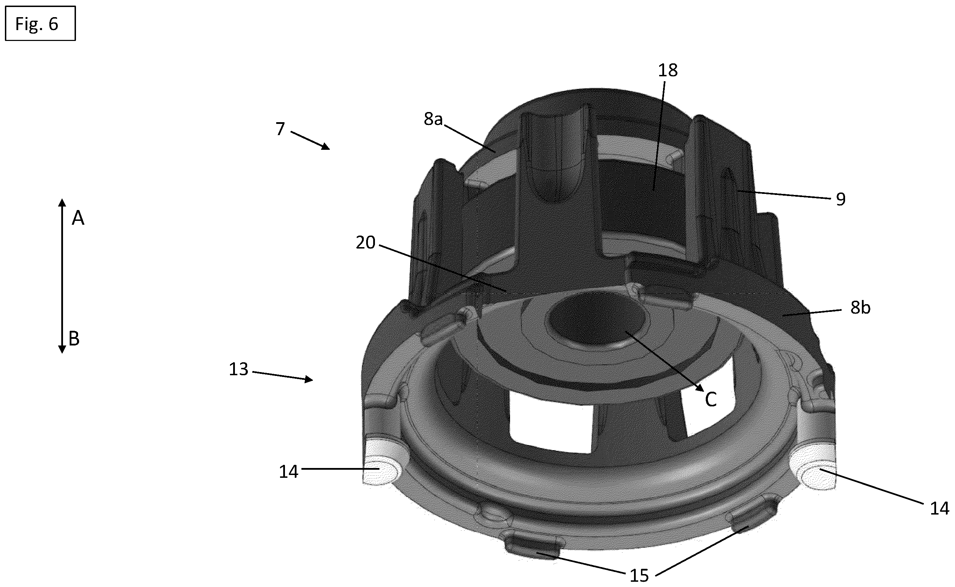

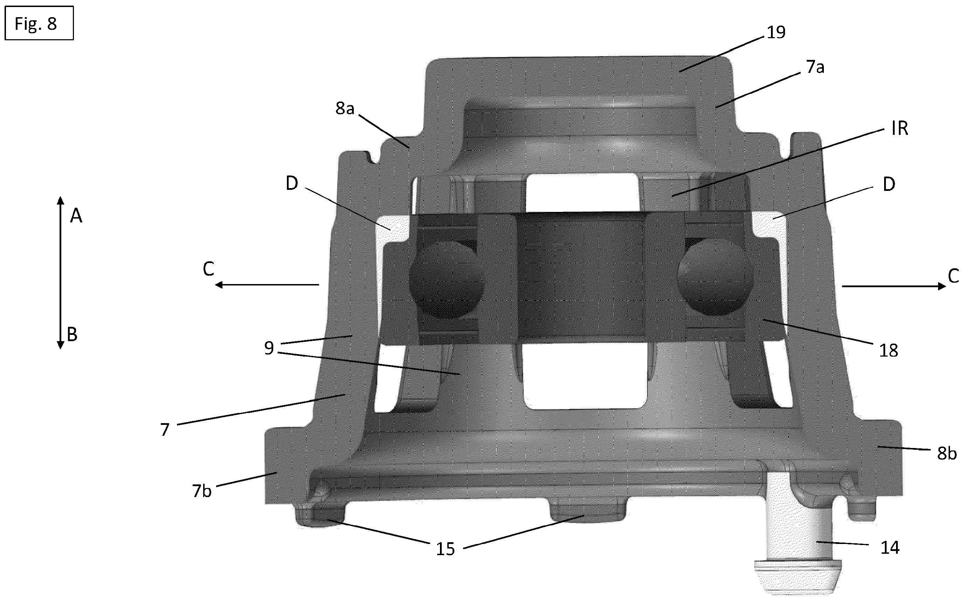

Wie in Figur 2 gezeigt, enthält die Positioniervorrichtung 7 an der Innenmantelfläche 7c eine Fixiereinrichtung 17 zum Aufnehmen und Halten eines Lagers 18 für das erste Ende 4a der Rotorwelle 4. In dem vorliegenden Ausführungsbeispiel ist das Lager 18 als Kugellager ausgestaltet. Die Fixiereinrichtung 17 enthält sechs Absätze 17a und sechs Positionierflächen 17b. Jedes Trägerelement 9 enthält dabei jeweils einen Absatz 17a sowie eine Positionierfläche 17b. Der Absatz 17a kann auch als Vorsprung bezeichnet werden. Jeder der Ansätze 17a enthält eine Auflagefläche. Die Positionierfläche 17b ist in Richtung B und oberhalb eines jeden Absatzes 17a an der Innenmantelfläche 7c positioniert.
Wenn das Lager 18 in den Innenraum IR der Positioniervorrichtung 7 positioniert wird, liegt das Lager 18 auf jedem der Absätze 17a in Richtung A auf und liegt an jedem der Positionierflächen 17b an, siehe Figur 6 und 8. Dadurch, dass die Positioniervorrichtung 7 elastisch ausgestaltet ist, verformen sich die Trägerelemente 9 ein wenig elastisch in eine radiale Richtung C, wenn das Lager 18 in den Innenraum IR der Positioniervorrichtung 7 eingelegt wird. Wie in Figur 8 angedeutet verdrängt das Lager 18 einen Bereich D an der Innenmantelfläche 7c der Positioniervorrichtung 7. Mit anderen Worten: in dem Bereich D ist das Material der Positioniervorrichtung 7 elastisch verformt bzw. gequetscht. Das Lager 18 ist durch die elastische Verformung der Trägerelemente 9 relativ fest bzw. unbeweglich in der Positioniervorrichtung 7 positioniert.

An dem ersten Ende 7a der Positioniervorrichtung 7 ist eine kreisrunde Staubschutzkappe 19 enthalten. Die Staubschutzkappe 19 verschließt die zentrale Öffnung des oberen Ringelements 8a und schützt dadurch in Richtung B den Innenraum IR der Positioniervorrichtung 7 vor eindringenden Staub und andere Verunreinigung.

Wie bereits vorstehend erwähnt weist eines der sechs Trägerelemente 9 an der Außenmantelwand eine axial verlaufende Aussparung 10 zum Aufnehmen und Halten der Leitung 11 auf. Wie in Figur 3 zu sehen ist, enthält das untere Ringelement 8b eine Aussparung 20. Die Aussparung 20 an dem unteren Ringelement 8b ist in Richtung B unter der Aussparung 10 an dem Trägerelement 9 positioniert. Die Aussparung 20 an dem unteren Ringelement 8b dient zur Aufnahme eines Steckers 21 an dem Ende der Leitung 11, die die Hall-Platine 5 mit der Steuerungseinrichtung verbindet, siehe Figur 4.

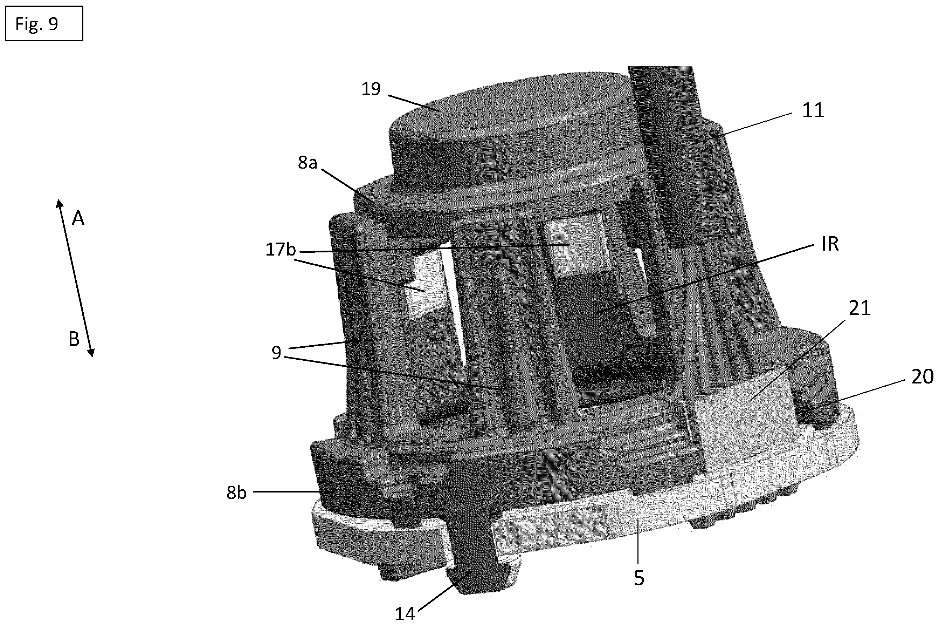

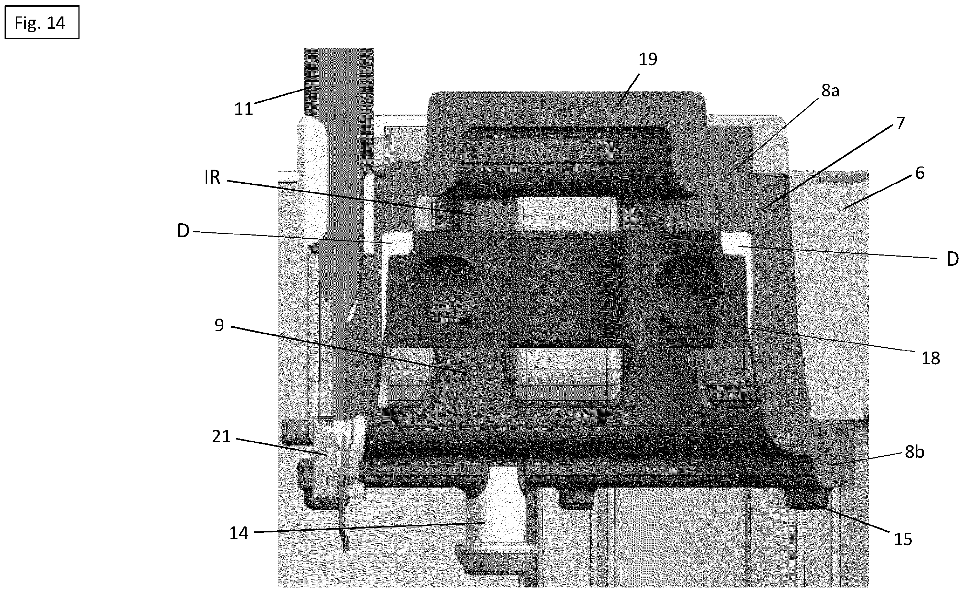

Figur 1 zeigt einen Teilbereich des Elektromotors in einem zusammengebauten Zustand. Die Rotorwelle 4 ist drehfest mit dem Rotor 3 verbunden. Der Rotor 3 und die Rotorwelle 4 sind drehbar innerhalb des Stators 2 positioniert. Das Lager 18 befindet sich, wie vorstehend beschrieben, in dem Innenraum IR der Positioniervorrichtung 7, siehe Figur 8. Die Positioniervorrichtung 7 ist so in dem Lagerbock 18 positioniert, dass das erste Ende der Rotorwelle 4 in den Innenraum IR der Positioniervorrichtung 7 hineinragt und das erste Ende 4a der Rotorwelle 4 in dem Lager 18 gelagert ist, siehe Figur 1. Die Staubschutzkappe 19 an dem ersten Ende 7a der Positioniervorrichtung 7 ragt in Richtung A etwas über den Lagerbock 6 hinaus, siehe Figur 14.
Die Leitung 11 ist an einem Ende mit dem Stecker 21 verbunden. Wie in Figur 9 gezeigt ist der Stecker 21 in die Hall-Platine 5 gesteckt. Der Stecker 21 befindet sich damit innerhalb der Aussparung des unteren Ringelements 8b. Die Leitung 11 erstreckt sich von dem Stecker 21 in Richtung A, sodass die Leitung 11 in der als Kerbe geformten Aussparung 10 an dem Trägerelement 9. Dadurch, dass sich die Leitung 11 in der axial verlaufenden Aussparung 10 befindet, ist der äußere Durchmesser der Positioniervorrichtung 7 nicht durch die an der Außenmantelfläche anliegende Leitung vergrößert.
Wenn die Positioniervorrichtung 7 zusammen mit der Leitung 11 in dem Lagerbock 6 positioniert ist, liegt die Leitung 11 zwischen dem Lagerbock 6 und der Positioniervorrichtung 7 an, siehe Figur 14. Die Leitung 11 ist damit relativ stabil bzw. fest zwischen dem Lagerbock 6 und der Positioniervorrichtung 7 eingeklemmt, wodurch verhindert werden kann, dass sich die Leitung 11 ungewollt bewegt oder sogar von der Hall-Platine 5 gelöst wird.

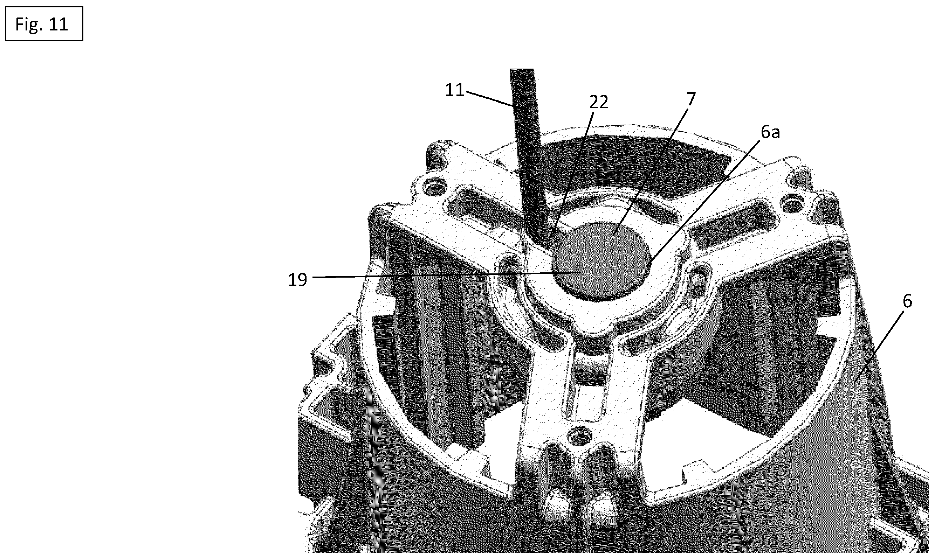

Des Weiteren enthält der Lagerbock 6 eine zusätzliche Öffnung 22 an der Oberseite, siehe Figur 11. Die Öffnung 22 dient dazu, dass die Leitung 11 von der im Lagerbock 6 befindlichen Positioniervorrichtung 7 aus dem Lagerbock 6 hinausgeführt werden kann. Der Durchmesser der Öffnung 22 entspricht dabei dem Durchmesser der Leitung 11, sodass die Leitung 11 die Öffnung 22 gegen eindringenden Staub verschließen kann. Zusätzlich wird die Leitung 11 durch die Öffnung 22 in dem Lagerbock 6 und/oder den Stator 2 gehalten bzw. gestützt.

Gemäß eines alternativen Ausführungsbeispiels kann die Positioniervorrichtung 7 teilweise aus elastischen Werkstoff hergestellt sein. So kann es beispielsweise möglich sein, dass lediglich die Trägerelemente 9 oder das obere und/oder untere Ringelemente 8a, 8b aus dem elastischen Werkstoff bestehen.

### Bezugszeichen:

- 1: Elektromotor
- 2: Stator
- 3: Rotor
- 4: Rotorwelle
- 5: Hall-Platine
- 6: Lagerbock
- 7: Positioniervorrichtung
- 7a: erstes Ende der Positioniervorrichtung
- 7b: zweites Ende der Positioniervorrichtung
- 7c: Innenmantelfläche der Positioniervorrichtung
- 7d: Außenmantelfläche der Positioniervorrichtung
- 8a: oberes Ringelement
- 8b: unteres Ringelement
- 9: Trägerelement
- 10: Aussparung an der Außenmantelfläche
- 11: Leitung
- 12: Hall-Sensor
- 13: Halteeinrichtung
- 14: Fixierelement
- 15: Ausrichtelemente
- 16: Aussparung an der Hall-Platine
- 17: Fixiereinrichtung
- 17a: Absatz an der Fixiereinrichtung
- 17b: Positionierfläche an der Fixiereinrichtung
- 18: Lager
- 19: Staubschutzkappe
- 20: Aussparung an dem unteren Ringelement
- 21: Stecker
- 22: Öffnung an dem Lagerbock
- D: Bereich, in dem das Material der Positioniervorrichtung elastisch verformt ist
- IR: Innenraum der Positioniervorrichtung

## Patentansprüche

1. Positioniervorrichtung (7) für einen Elektromotor (1) und Lagerbock (6), wobei der Elektromotor (1) einen Rotor (3), eine Rotorwelle (4) und Stator (2) enthält
**dadurch gekennzeichnet, dass** die Positioniervorrichtung (7) wenigstens teilweise aus einem elastischen Werkstoff und im Wesentlichen topfartig mit einem Innenraum (IR) ausgestaltet ist sowie in einer zentralen Ausnehmung (6a) des Lagerbocks (6) zur wenigstens teilweisen Aufnahme eines erstes Endes (4a) der Rotorwelle (4) positionierbar ist.

2. Positioniervorrichtung (7) nach Anspruch 1,
**dadurch gekennzeichnet, dass** wenigstens eine Fixiereinrichtung (17) enthalten ist zum Aufnehmen und Halten eines Lager (18) für das erste Ende (4a) der Rotorwelle (4).

3. Positioniervorrichtung (7) nach Anspruch 1 oder 2,
**dadurch gekennzeichnet, dass** wenigstens eine Halteeinrichtung (13) enthalten ist zum Aufnehmen und Halten einer Hall-Platine (5).

4. Positioniervorrichtung (7) nach wenigstens einem der Ansprüche 1 bis 3,
**dadurch gekennzeichnet, dass** an einer Außenmantelfläche (7d) eine axial verlaufende Aussparung (10) enthalten ist zur wenigstens teilweisen Aufnahme und Halten einer Leitung (11), wenn sich die Positioniervorrichtung (7) in der zentralen Ausnehmung (6a) des Lagerbocks (6) befindet.

5. Positioniervorrichtung (7) nach wenigstens einem der Ansprüche 1 bis 4,
**dadurch gekennzeichnet, dass** an einem ersten Ende der Positioniervorrichtung (7) eine Staubschutzkappe (19) enthalten ist.

6. Elektromotor (1) enthaltend einen Rotor (3), eine Rotorwelle (4) und einen Stator (2), wobei der Elektromotor (1) mit einem Lagerbock (6) verbindbar ist,
**gekennzeichnet durch** eine Positioniervorrichtung (7), welche wenigstens teilweise aus einem elastischen Werkstoff und im Wesentlichen topfartig mit einem Innenraum (IR) ausgestaltet ist sowie in einer zentralen Ausnehmung (6a) des Lagerbocks (6) zur wenigstens teilweisen Aufnahme eines erstes Endes (4a) der Rotorwelle (4) positionierbar ist.
